# EUROPÄISCHE PATENTSCHRIFT

(11) **EP 1 771 325 B1**
(45) Veröffentlichungstag und Bekanntmachung des Hinweises auf die Patenterteilung: **07.05.2008**
(21) Anmeldenummer: 05775872.4
(22) Anmeldetag: 18.07.2005
(51) Int. Cl.: B60T 13/74, B60T 7/10

(54) **STELLEINRICHTUNG FÜR EINE FESTSTELLBREMSE**
ACTUATING DEVICE FOR A PARKING BRAKE
DISPOSITIF DE RÉGLAGE POUR UN FREIN DE STATIONNEMENT

(30) Priorität: 27.07.2004 EP 04017782
(43) Veröffentlichungstag der Anmeldung: 11.04.2007
(73) Patentinhaber: SIEMENS AKTIENGESELLSCHAFT, 80333 München (DE)
(72) Erfinder: DEUTLOFF, Norbert, 97291 Thüngersheim (DE); KRAFT, Ekkehard, 97282 Retzstadt (DE); ROOS, Stephan, 97877 Wertheim (DE); SAUER, Armin, 97450 Arnstein (DE)
(86) Internationale Anmeldenummer: PCT/EP2005/053455
(87) Internationale Veröffentlichungsnummer: WO 2006/010722

(56) Entgegenhaltungen:
- EP-A- 1 158 198
- WO-A-02/059496
- US-A- 3 481 434
- US-A- 5 542 513

## Beschreibung

Die Erfindung betrifft eine Stelleinrichtung für eine elektromechanisch betätigte Kraftfahrzeug-Feststellbremse.

Eine Stelleinrichtung gemäß dem Oberbegriff des Anspruchs 1 ist aus dem Dokument US-A-3 481 434 bekannt geworden.

Während des Betriebes einer Feststellbremse ist es aufgrund von Verschleiß, beispielsweise der Bremsbacken, oder Setzverhalten, beispielsweise des Bremsseiles, erforderlich, die Bremsseillänge nachzustellen. Damit sollen im Wesentlichen unnötige Seilwege beim Anziehen des Bremsseils vermieden werden, damit das Bremsseil schnell und sicher angezogen werden kann.

Aus dem Stand der Technik sind hierzu mechanische Nachstellvorrichtungen bekannt, die zumeist in den Kraftfluss des Bremszuges nach Art einer "mechanischen Reihenschaltung" eingebaut werden. Das Grundprinzip derartiger Nachstellvorrichtungen beruht darauf, dass zwei Zähne ineinander greifen und die Seilkraft übertragen. Sobald die Zähne nicht mehr ineinander greifen, wird der Kraftfluss unterbrochen. In der Regel ist dabei der eine Zahn als Zahnstange und der andere Zahn als Klinke ausgeführt. Je nach Verschleiß greift dabei die Klinke in einen bestimmten Zahn der Zahnstange ein.

Bei elektromechanisch betätigten Feststellbremsen, beispielsweise einer mit einem elektromotorisch angetriebenen Bremsaktuator betriebenen Parkbremse mit Spindelantrieb, erfolgt die Nachstellung über eine Messung der beiden voneinander abhängigen Größen Seilweg und Seilkraft in Verbindung mit einer entsprechenden Ansteuerung des Antriebs. Von Nachteil dabei ist, dass Wegmessung, Kraftmessung und Ansteuerung des Antriebs aufwändige und verhältnismäßig teure sowie fehleranfällige Bauteile erfordern.

Aufgabe der Erfindung ist es, eine Stelleinrichtung, insbesondere für eine elektromechanisch betätigte Kraftfahrzeug-Feststellbremse, mit einem einfachen Seilausgleich bereitzustellen.

Diese Aufgabe wird durch eine Stelleinrichtung nach Anspruch 1 gelöst. Ein Grundgedanke der Erfindung liegt darin, auch bei elektromechanisch betätigten Feststellbremsen einen Seilausgleich vorzusehen, der im Wesentlichen auf einem mechanischen System beruht. Damit entfällt die aufwändige Signalerfassung der Weg- und Kraftmessung und deren Verarbeitung.

Es ist vorgesehen, den Kraftfluss zwischen Bremsaktuator und Bremszug bei jedem Lösevorgang zu trennen. Hierdurch wird der Bremszug im gelösten Zustand frei von der Kraftbeaufschlagung durch den Bremsaktuator.

Darüberhinaus ist ein Federelement vorgesehen, welches bei aufgehobenem Kraftschluss den mit dem Bremsseil gekoppelten Teil der Koppelvorrichtung mit einer Kraft in Anzugsrichtung beaufschlagt und damit eine definierte Seilvorspannkraft beim Wiederherstellen des Kraftschlusses zwischen Aktuator und Bremszug gewährleistet. Dies bedeutet, dass der Bremszug sich in eine Position begibt, die den jeweils aktuellen Bremszugeigenschaften (wie beispielsweise Längung oder Verkürzung des Bremszuges) entspricht.

Da das Koppelelement an eine definierte Endposition bewegt wird, erfolgt bei seinem Wiederanziehen des Bremszuges ein selbsttätiges Wiederherstellen des Kraftschlusses an einer optimalen Position. Mit anderen Worten erfolgt hierdurch eine selbsttätige Seilnachstellung, ohne dass eine Wegmessung oder dergleichen erforderlich ist.

Die Trennung des Kraftflusses erfolgt dabei unter Verwendung einer Koppelvorrichtung, wobei die Koppelvorrichtung ein Koppelelement aufweist, das bei einem Lösen des Bremszuges über ein Kulissengetriebe zum Aufheben des Kraftschlusses auslenkbar und in eine definierte Endposition überführbar ist.

Vorteilhafte Ausgestaltungen sind in den Unteransprüchen angegeben.

In einer besonders bevorzugten Ausführungsform der Erfindung wird die Koppelvorrichtung durch den gleichen Aktuator betätigt, der auch den Bremszug betätigt. Hierdurch ist ein besonders kompakter Aufbau der Stelleinrichtung möglich. Alternativ dazu ist es ebenfalls möglich, einen separaten Aktuator zur Betätigung der Koppelvorrichtung vorzusehen. In diesem Fall ist auch eine von der Betätigung des Bremszuges unabhängige Betätigung der Koppelvorrichtung möglich.

Besonders vorteilhaft ist es, wenn die Betätigung der Koppelvorrichtung steuerbar ist. Insbesondere ist es hierdurch möglich, von Fall zu Fall zu entscheiden, ob das Bewegen des Koppelelementes an eine definierte Endposition und damit ein Seilausgleich erfolgen soll oder aber ob lediglich der Kraftfluss zwischen Aktuator und Bremszug getrennt werden soll, ohne das ein Seilausgleich erfolgt. Hierzu ist vorzugsweise eine Steuereinheit vorgesehen. Ist die Betätigung der Koppelvorrichtung nicht steuerbar, erfolgt der Seilausgleich vorzugsweise bei jedem Lösevorgang.

Das Koppelelement wird über ein Kulissengetriebe ausgelenkt. In einer Ausführungsform der Erfindung greift dabei das Koppelement in eine Kurvenführung ein, welche eine von der axialen Bewegungsrichtung des Aktuators abweichende Bahnkurve beschreibt. Die Kurvenführung ist dabei vorteilhafterweise in einem bereits vorhandenen Gehäuseteil der Stelleinrichtung vorgesehen. Durch Verfahren des Koppelelements in Axialrichtung erfolgt ein Auslenken des Koppelelementes und damit ein Aufheben des Kraftschlusses zwischen Aktuator und Bremszug.

In einer weiteren Ausführungsform der Erfindung wird das Koppelelement mit Hilfe eines Betätigungselementes durch ein Kulissengetriebe ausgelenkt. Dieses Betätigungselement ist vorzugsweise als ein an der Koppelvorrichtung angeordneter Taster ausgebildet, der bei einer Axialbewegung der Koppelvorrichtung verschoben wird und einen an dem Koppelelement angeordneten Umlenkhebel betätigt.

Die Bewegung beim Auslenken des Koppelelementes wird dabei durch die Form des Umlenkhebels mitbestimmt.

Das Auslenken des Koppelelementes erfolgt vorzugsweise dadurch, dass sich das Betätigungselement bei Erreichen einer bestimmten axialen Position der Koppelvorrichtung an einem definiert positionierten Anschlag abstützt und der Umlenkhebel durch eine weitere axiale Bewegung der Koppelvorrichtung in Richtung Anschlag betätigt wird. Der Anschlag ist vorzugsweise als Bestandteil eines bereits vorhandenen Gehäuses der Stelleinrichtung ausgebildet.

In einer weiteren bevorzugten Ausführungsform der Erfindung sind Betätigungselement und Koppelelement in einem gemeinsamen Bauteil zusammengefasst. Hierdurch wird der konstruktive Aufwand weiter verringert.

Die Position des Anschlages ist vorzugsweise variabel einstellbar, so dass die Durchführung einer Seilnachstellung in Abhängigkeit von Anwendungsparametern eingestellt werden kann.

Die Erfindung wird im Folgenden anhand schematisch dargestellter Ausführungsbeispiele beschrieben, die anhand von Zeichnungen näher erläutert werden. Dabei zeigen:
- FIG 1: eine perspektivische Ansicht einer Stelleinrichtung mit teilweise aufgeschnittenem Gehäuse,
- FIG 2: eine erste Ausführungsform einer Stelleinrichtung mit teilweise angezogenem Bremszug in Längsschnitt,
- FIG 3: einen Ausschnitt aus FIG 2 mit teilweise durchscheinend mit Hilfe einer gestrichelten Linie dargestellten Bauteilen,
- FIG 4: die Stelleinrichtung gemäß FIG 2 mit gelöstem Bremszug,
- FIG 5: einen Ausschnitt aus FIG 4 mit teilweise durchscheinend mit Hilfe einer gestrichelten Linie dargestellten Bauteilen,
- FIG 6: eine zweite Ausführungsform einer Stelleinrichtung mit teilweise angezogenem Bremszug in Längsschnitt,
- FIG 7: einen Ausschnitt aus FIG 6 mit teilweise durchscheinend mit Hilfe einer gestrichelten Linie dargestellten Bauteilen,
- FIG 8: die Stelleinrichtung gemäß FIG 6 mit gelöstem Bremszug,
- FIG 9: einen Ausschnitt aus FIG 8 mit teilweise durchscheinend mit Hilfe einer gestrichelten Linie dargestellten Bauteilen,
- FIG 10: eine dritte Ausführungsform einer Stelleinrichtung mit teilweise angezogenem Bremszug in Längsschnitt,
- FIG 11: einen Ausschnitt aus FIG 10 mit teilweise durchscheinend mit Hilfe einer gestrichelten Linie dargestellten Bauteilen,
- FIG 12: die Stelleinrichtung gemäß FIG 10 mit gelöstem Bremszug,
- FIG 13: einen Ausschnitt aus FIG 12 mit teilweise durchscheinend mit Hilfe einer gestrichelten Linie dargestellten Bauteilen,
- FIG 14: eine Stelleinrichtung mit Notbetätigung mit teilweise angezogenem Bremszug,
- FIG 15: die Stelleinrichtung aus FIG 14 mit gelöstem Bremszug.

Die Erfindung wird anhand einer elektromechanisch betätigten Kraftfahrzeug-Feststellbremse erläutert.

Funktionsgleiche Elemente sind in den verschiedenen Figuren mit gleichen Bezugszeichen versehen.

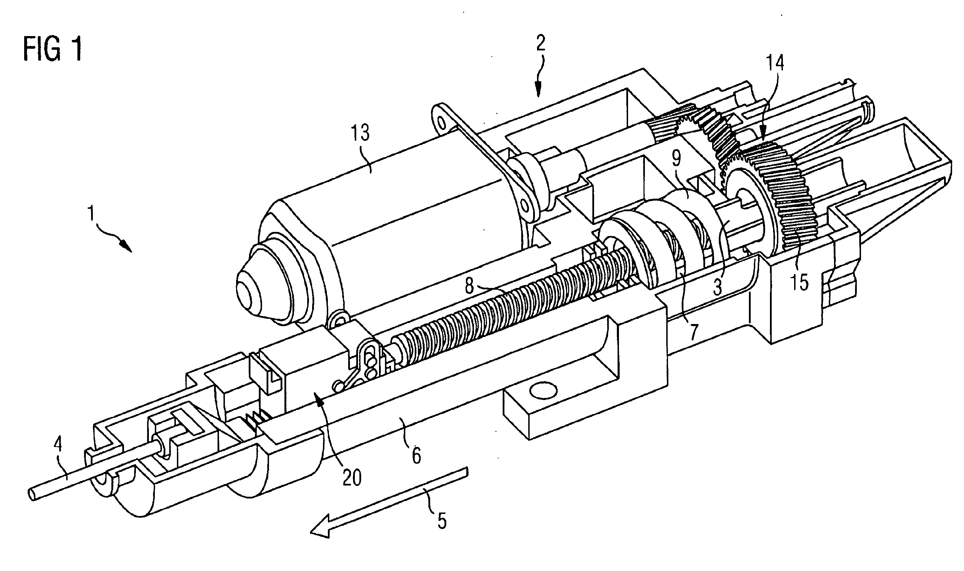

Wie in FIG 1 abgebildet, umfasst die Stelleinrichtung 1 im Wesentlichen einen elektromechanischen Antrieb 2, einen von dem Antrieb 2 betätigbaren Aktuator 3 sowie einen von dem Aktuator 3 betätigbaren Bremszug 4.

Dabei wird der in axialer Richtung 5 verschiebbare Aktuator 3 in Form einer Teleskopvorrichtung von einem Gehäuse 6 aufgenommen. Der Aktuator 3 umfasst eine Hohlwelle 7 und eine mit dieser in axialer Dreh-Vorschubverbindung stehende, den Bremszug 4 betätigende Spindelwelle 8.

Als Vorschubabstützung der Hohlwelle 7 ist ein elastisches Element in Form einer die Hohlwelle 7 bzw. die Spindelwelle 8 konzentrisch umfassenden Schraubenfeder 9 vorgesehen, die als Druckfeder mit ihrem einen Ende über ein feststehendes Axialdrucklager 10 an einer Schulter 11 des Gehäuses 6 und mit ihrem anderen axialen Ende an einem umlaufenden Kragen 12 der Hohlwelle 7 anliegt.

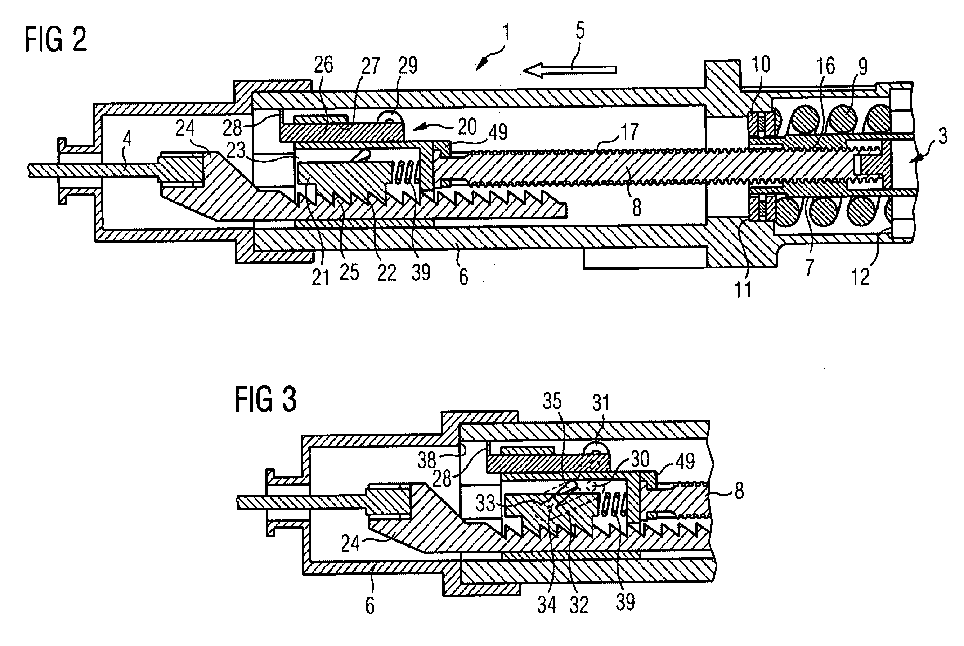

FIG 2 und 3 zeigen eine Stelleinrichtung mit angezogenem Bremszug 4 (Bremsstellung). Beim Antrieb des Aktuators 3 im Sinne einer Bewegung des Bremszuges 4 nach rechts, d. h. im Sinne eines Festziehens der Feststellbremse, wird die Schraubenfeder 9 unter Andruck gegen das Axiallager 10 komprimiert.

Die Übertragung eines Drehmomentes erfolgt dabei von einem Elektromotor 13 der Stelleinrichtung 1 über ein Getriebe 14 hin zu einem axial verschieblich mit der Hohlwelle 7 in fester Antriebsverbindung stehenden Antriebsgetrieberad 15 in Form eines Zahnrades. Die durch das Antriebsgetrieberad 15 in Drehung versetzte Hohlwelle 7 weist ein Innengewinde 16 auf. Über dieses Innengewinde 16 wird über das kämmende Außengewinde 17 der Spindelwelle 8 eine axiale Vorschubbewegung der Spindelwelle je nach Drehrichtung des Antriebes 8 in positiver oder negativer axialer Richtung 5 erzielt.

Aktuator 3 und Bremszug 4 sind über eine Koppelvorrichtung 20 miteinander verbunden. Die Koppelvorrichtung 20 umfasst ein als Sperrriegel ausgebildetes Koppelelement 21 und eine Zahnstange 24. Das Koppelelement 21 weist mehrere als Klinken ausgeführte Zähne 22 auf. Das Koppelelement 21 ist in einem Koppelvorrichtungsgehäuse 23 angeordnet, an welchem stirnseitig die Spindelwelle 8 des Aktuators 3 befestigt ist. Am Bremszug 4 ist eine sich im Gehäuse 6 der Feststellbremse 1 in axialer Richtung 5 erstreckende Zahnstange 24 befestigt derart, dass in der abgebildeten Stellung mit angezogenem Bremszug 4 das Koppelelement 21 mit seinen Zähnen 22 in die Zähne 25 der Zahnstange 24 eingreift und ein Kraftschluss zwischen Aktuator 3 und Bremszug 4 zur Übertragung der Seilkraft vorliegt.

In dem Koppelvorrichtungsgehäuse 23 ist ein Betätigungstaster 26 in einer Axialführung 27 gelagert. Der Betätigungstaster 26 weist an seinem in Richtung Bremszug 4 weisenden Ende einen Betätigungsanschlag 28 auf. Mit seinem gegenüberliegenden Ende ist der Betätigungstaster 26 mit einem Umlenkhebel 29 verbunden, der an einem Drehpunkt 30 drehbar mit dem Koppelvorrichtungsgehäuse 23 verbunden ist. Der Umlenkhebel 29 weist dabei zwei Schenkel 31, 32 auf, die in einem stumpfen Winkel zueinander angeordnet sind. Der Drehpunkt 30 ist dabei an dem Verbindungspunkt beider Schenkel angeordnet. Der eine Schenkel 31 des Umlenkhebels 29 ist beweglich mit dem Betätigungstaster 26 verbunden, während der andere Schenkel 32 des Umlenkhebels 29 eine Führungskulisse 33 aufweist, in die ein an dem Koppelelement 21 angebrachtes stiftförmiges Lenkelement 34 eingreift. Dieses Lenkelement 34 greift gleichwohl in eine schräg zur Axialrichtung 5 verlaufenden Führungskulisse 35 des Koppelvorrichtungsgehäuses 23 ein.

Zum Lösen des Bremszuges 4 erfolgt über den Elektromotor 13 eine Drehung der Hohlwelle 7, so dass sich die Spindelwelle 8 nach links bewegt. Mit zunehmendem Löseweg nimmt die am Bremszug 4 wirkende Last ab. Gleichzeitig entspannt sich die Schraubenfeder 9. Durch die Entlastung wird die Hohlwelle 7 einschließlich des Antriebsgetrieberades 15 mittels Federkraft der Schraubenfeder 9 nach rechts gedrückt.

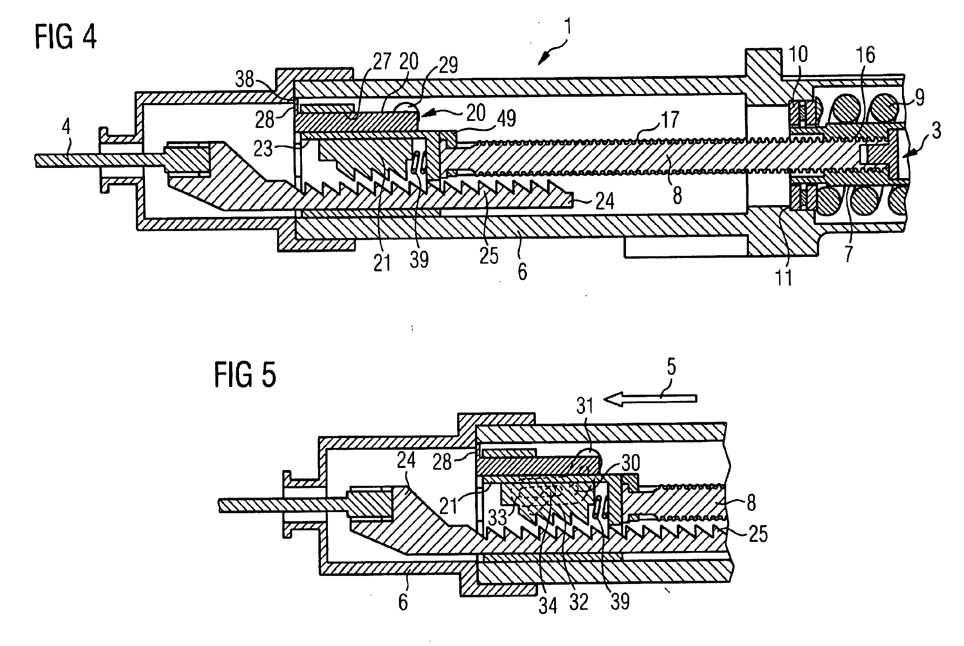

Beim Verfahren des Aktuators 3 in die Löseposition schlägt der Betätigungstaster 26 mit seinem Betätigungsanschlag 28 an einem am Gehäuse 6 der Stelleinrichtung 1 vorgesehenen Endanschlag 38 an. Wird die Bewegung der Koppelvorrichtung 20 fortgesetzt, so wird der Betätigungstaster 26 in seiner Axialführung 27 im Koppelvorrichtungsgehäuse 23 verfahren derart, dass der an dem Betätigungstaster 26 befestigte Umlenkhebel 29 ausgelenkt wird. Dabei bewegt sich der mit dem Betätigungstaster 26 verbundene Schenkel 31 des Umlenkhebels 29 in Richtung Spindelwelle 8. Durch die hierdurch hervorgerufene Drehung des Umlenkhebels 29 um seinen Drehpunkt 30 erfolgt eine Verschiebung des Lenkelementes 34 mit Hilfe der Führungskulisse 33 des zweiten Schenkels 32 in der Führungskulisse 35 des Koppelvorrichtungsgehäuses 23. Das mit dem Lenkelement 34 verbundene Koppelelement 21 wird dadurch aus der Kraftschlussebene herausgeführt wodurch der Kraftschluss zwischen Aktuator 3 und Bremszug 4 aufgehoben wird. Eine solche Löseposition ist in den FIG 4 und 5 dargestellt.

Das Verfahren der Koppelvorrichtung 20 erfolgt bis zu einer definierten Endposition, in welcher der Maximalweg des Betätigungstasters 26 in der Axialführung 27 des Koppelvorrichtungsgehäuses 23 zurückgelegt ist bzw. ein weiteres Verfahren der Koppelvorrichtung 20 in Richtung Endanschlag 38 nicht mehr möglich ist.

In der Löseposition ist der Bremszug 4 kraftfrei. Falls erforderlich erfolgt eine selbsttätige Lageänderung des Bremszuges 4 zum Ausgleich von Längenänderungen. Hierdurch wird ein optimaler Hub sowie eine kurze Aktivierungszeit und damit eine Optimierung des nächsten Anzugsvorganges der Feststellbremse 1 erreicht.

Für ein Wiederherstellen des Kraftschlusses zwischen Aktuator 3 und Bremszug 4 ist eine Betätigung des Aktuators 3 im Sinne einer Bewegung der Spindelwelle 8 nach rechts erforderlich. Die Koppelvorrichtung 20 wird durch die Spindelwelle 8 mitgenommen, wodurch das Koppelelement 21 wieder zurück in die Kraftschlussebene zurückgeführt wird. Hierzu ist zudem ein Federelement 39 vorgesehen, welches zwischen Koppelvorrichtungsgehäuse 23 und Koppelelement 21 angeordnet ist und während der Auftrennung des Kraftschlusses komprimiert ist. Beim Anziehen der Stelleinrichtung 1 drückt das Federelement 39 dann das Koppelelement 21 entlang der Führungskulisse 35 in die Zahnstange 24 hinein.

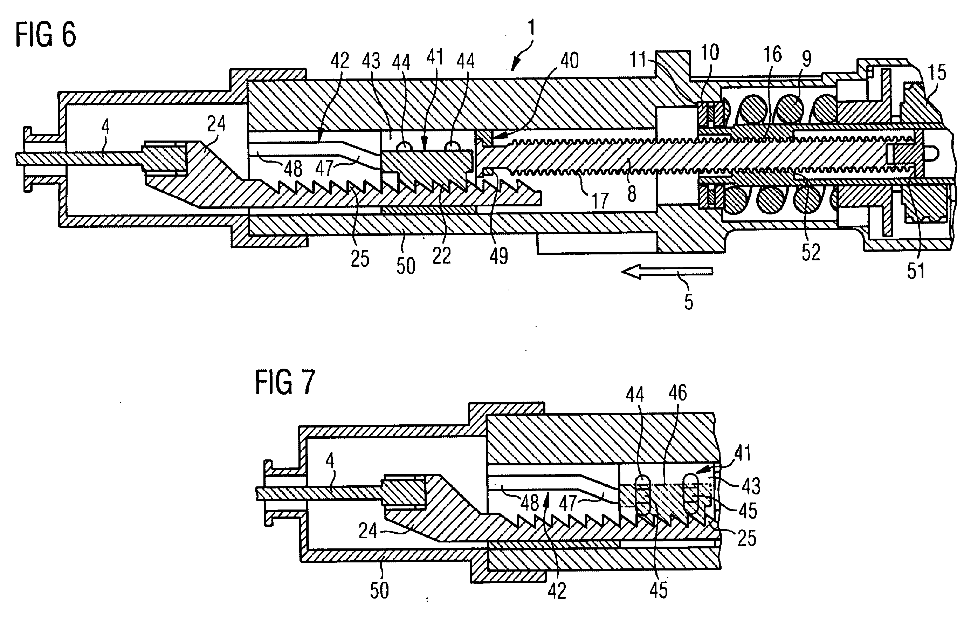

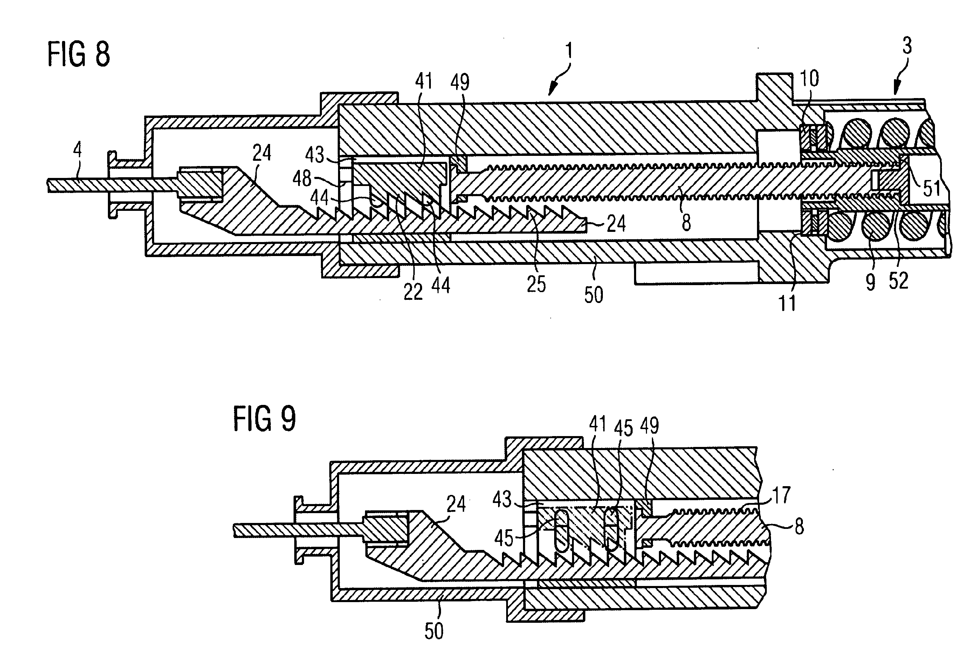

In der in FIG 6-9 dargestellten Ausführungsform einer Feststellbremse 1 kommt eine Koppelvorrichtung 40 zum Einsatz, die keinen Betätigungstaster aufweist. Auch das Federelement am Koppelelement entfällt. Die Auslenkung des Koppelelementes 41 erfolgt durch dessen Führung in einer im Gehäuse 50 der Stelleinrichtung 1 vorgesehenen Kurvenführung 42. Hierzu sind an dem Koppelelement 41 seitlich Gehäuseflächen 43 angebracht, in denen jeweils zwei senkrecht zur axialen Richtung 5 verlaufenden Führungskulissen 44 vorgesehen sind. In diese Führungskulissen 44 greifen mit dem Koppelelement 41 starr verbundene stiftförmige Lenkelemente 45 ein. Diese Lenkelemente 45 greifen weiterhin permanent in die Kurvenführung 42 ein. Die im Gehäuse 50 eingebrachte Kurvenführung 42 verläuft dabei auf einem ersten Teilstück 46 parallel zur axialen Richtung 5 derart, dass sich das Koppelelement 41 in der Kraftschlussebene befindet. An dieses erste Teilstück 46 schließt sich ein zweites Teilstück 47 an, in dem die Kurvenführung 42 schräg zur axialen Richtung 5 verläuft. Die Bahnführung 42 endet in einem dritten Teilstück 48, welches wiederum parallel zur axialen Richtung 5, jedoch zu dem ersten Teilstück 46 versetzt verläuft.

Die Spindelwelle 8 ist wiederum mit einem Gehäuseteil 49 der Koppelvorrichtung 40 verbunden. Bei einer Betätigung des Aktuators 3 im Sinne eines Lösens der Feststellbremse 1 erfolgt ein Verfahren der Spindelwelle 8 und damit auch der Koppelvorrichtung 40 nach links. Die in die Kurvenführung 42 eingreifenden und mit dem Koppelelement 41 verbundenen Lenkelemente 45 verändern dabei ihre Position in den Führungskulissen 44 derart, dass das Koppelelement 41 aus der Kraftschlussebene herausgeführt wird.

In der Löseposition ist der Bremszug 4 wiederum kraftfrei und kann seine Lage frei wählen, so dass das Wiederanziehen der Feststellbremse 1 mit einem ausgeglichenen Bremszug 4 erfolgt.

An dem Ende der Spindelwelle 8, welches dem Koppelelement 41 gegenüberliegt, ist ein Anschlag 51 vorgesehen, der dazu dient, eine Endposition der Koppelvorrichtung 40 festzulegen. Bei vollständig gelöstem Bremszug 4 schlägt der Anschlag 51 an einem hierfür vorgesehenen Gegenanschlag 52 an der Hohlwelle 7 an. Die Spindelwelle 8 kann dann nicht weiter in Richtung Bremszug 4 ausgefahren werden. Der Anschlag 51 ist vorzugsweise mit einem Schraubgewinde versehen und in eine Gewindeöffnung der Spindelwelle 8 einschraubbar, so dass die Endposition der Spindelwelle 8 im Rahmen der Gewindelänge einstellbar ist. Alternativ kann der Anschlag 51 anstelle eines Schraubgewindes auch einen glatten Zylinderfuß zum Herstellen einer unlösbaren Verbindung durch Einpressen in eine Öffnung der Spindelwelle 8 aufweisen.

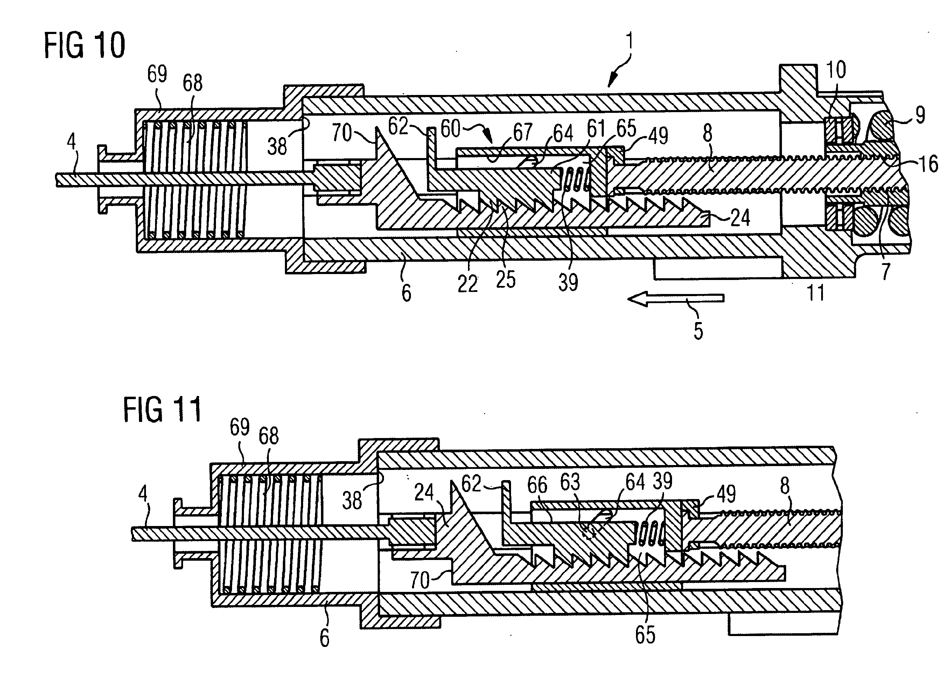

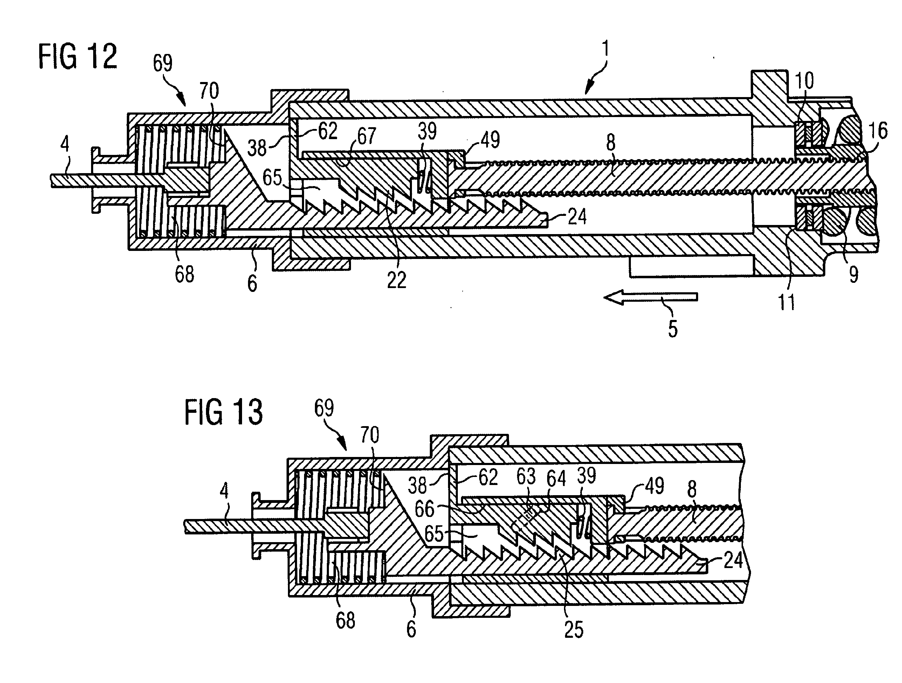

In einer in FIG 10-13 dargestellten erfindungsgemäßen Ausführungsform der Stelleinrichtung 1 kommt eine Koppelvorrichtung 60 mit einem Koppelelement 61 zum Einsatz, bei der ein Betätigungstaster 62 direkt an dem Koppelelement 61 angeordnet ist. Ein Umlenkhebel ist nicht erforderlich. Beim Lösen der Feststellbremse erfolgt ein Verfahren des Koppelelementes 61 nach links in Richtung auf den Endanschlag 38 zu. Der Endanschlag 38 ist in dieser Ausführungsform vorzugsweise als ein seitlich am Gehäuse 6 vorgesehener Vorsprung oder dergleichen ausgebildet. Schlägt der Betätigungstaster 62 an dem Endanschlag 38 an, wird bei einem weiteren Verfahren der Spindelwelle 8 das Koppelelement 61 aus der Kraftschlussebene herausbewegt. In seiner Endposition liegt das Koppelelement 61 mit seiner Oberseite 66 an einer Anschlagfläche 67 des Koppelvorrichtungsgehäuses 65 an. Für das Herausschwenken des Koppelelementes 61 aus der Kraftschlussebene ist ein an dem Koppelelement 61 angeordnetes, stiftförmiges Lenkelement 63 vorgesehen, welches in eine schräg zur Axialrichtung 5 verlaufende Führungskulisse 64 des Koppelvorrichtungsgehäuses 65 eingreift. Bei einem Verfahren der mit einem Gehäuseteil 49 der Koppelvorrichtung 60 verbundenen Spindelwelle 8 in Richtung Endanschlag 38 erfolgt eine Komprimierung eines zwischen Koppelvorrichtungsgehäuse 65 und Koppelelement 61 angeordneten Federelements 39. Beim Anziehen der Feststellbremse drückt das Federelement 39 dann das Koppelelement 61 entlang der Führungskulisse 64 wieder in die Zahnstange 24 hinein.

Darüber hinaus weist das in den FIG 10-13 dargestellte Ausführungsbeispiel ein die Zahnstange 24 beaufschlagendes Federelement auf. Das Federelement ist als Druckfeder 68 ausgebildet und dient zur Gewährleistung einer definierten Seilvorspannkraft. Im angezogenen oder teilweise angezogenen Zustand liegt die Druckfeder 68 frei in einem vorderen, dem Bremszug 4 zugewandten Abschnitt 69 des Gehäuses 6. Ist der Bremszug 4 gelöst, schlägt ein an der Zahnstange 24 endseitig vorgesehener Rundanschlag 70 an der Druckfeder 68 an und beaufschlagt die Druckfeder 68 mit der am Bremszug 4 wirkenden Kraft. Durch geeignete Wahl der Druckfeder 68 kann.somit eine definierte Positionierung der Zahnstange 24 im Moment des Wiederherstellens des Kraftschlusses ermöglicht werden. Die am Bremszug 4 wirkende Seilkraft wird mit anderen Worten durch die Federkraft der Druckfeder 68 bestimmt. Hierdurch ist auf einfache Art und Weise eine selbsttätige Anpassung der Seillänge des Bremszuges 4 realisiert. Bei einem Anziehen des Bremszuges 4 werden unnötige Seilwege vermieden. Der Bremszug 4 kann schnell und sicher angezogen werden.

Dieser Seilausgleichsmechanismus kann bei sämtlichen beschriebenen Ausführungsformen der Erfindung eingesetzt werden.

Bei allen Ausführungsformen dient eine im Gehäuse 6, 50 angeordnete, jedoch nicht näher dargestellte Steuereinheit zur Ansteuerung des Aktuators 3 und damit zur Betätigung der Koppelvorrichtung 20, 40.

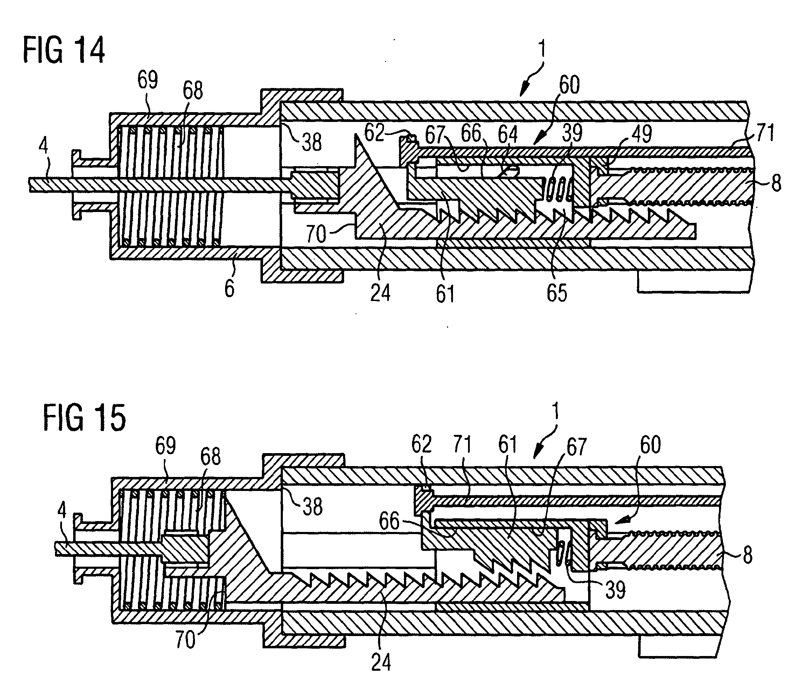

Die FIG 14 und 15 zeigen schließlich eine weitere Ausführungsform der Erfindung, bei der eine Notbetätigung der Feststellbremse im Sinne eines Lösens der Bremse, beispielsweise bei nicht funktionierendem Aktuator 3, vorgesehen ist. Hierzu ist an dem Betätigungstaster 62 des Koppelelements 61 ein zusätzlicher Seilzug 71 oder dergleichen angebracht, der außerhalb des Koppelvorrichtungsgehäuses 65 und innerhalb des Gehäuses 6 zu einem externen, von dem Aktuator 3 unabhängigen Betätigungselement, beispielsweise einem Taster, verläuft. Durch eine Betätigung des Tasters erfolgt bei unbewegter Spindelwelle 7 eine Bewegung des Koppelelementes 61 über die Führungskulisse 64 entgegen dem Druck des Federelements 39 aus der Kraftschlussebene heraus, vorzugsweise bis zu einer Endposition, in der das Koppelelement 61 mit seiner Oberseite 66 an einer Anschlagfläche 67 des Koppelvorrichtungsgehäuses 65 anliegt. Eine solche Art der Notbetätigung ist u.a. auf die in den FIG 2 bis 5 sowie auf die in den FIG 10 bis 13 abgebildeten Ausführungsformen der Erfindung anwendbar.

## Patentansprüche

1. Stelleinrichtung (1)-für eine Kraftfahrzeug-Feststellbremse,
- mit einem elektromechanisch betätigten Antrieb (2),
- mit einem von dem Antrieb (2) betätigbaren Aktuator (3),
- mit einem von dem Aktuator (3) betätigbaren Bremszug (4),
- mit einer Koppelvorrichtung (20; 40) zum Aufheben und Wiederherstellen eines Kraftschlusses zwischen Aktuator (3) und Bremszug (4), wobei die Koppelvorrichtung (20; 40) ein Koppelelement (21; 41) aufweist, das bei einem Lösen des Bremszuges (4) über ein Kulissengetriebe (26, 27, 28, 29, 30, 31, 32, 33, 34, 35; 44, 45, 46, 47, 48) zum Aufheben des Kraftschlusses auslenkbar und in eine definierte Endposition überführbar ist,
**gekennzeichnet durch** ein bei aufgehobenem Kraftschluss einen Bestandteil (24) der Koppelvorrichtung (20, 40) beaufschlagendes Federelement (68) zur Gewährleistung einer definierten Seilvorspannkraft beim Wiederherstellen des Kraftschlusses zwischen Aktuator (3) und Bremszug (4).

2. Stelleinrichtung (1) nach Anspruch 1, **dadurch gekennzeichnet, dass** die Koppelvorrichtung (20; 40) durch den BremsAktuator (3) betätigbar ist.

3. Stelleinrichtung (1) nach Anspruch 1 oder 2, **gekennzeichnet durch** eine Steuereinheit zur Steuerung der Betätigung der Koppelvorrichtung (20; 40).

4. Stelleinrichtung (1) nach einem der Ansprüche 1 bis 3, **gekennzeichnet durch** Zusammenwirken des Kulissengetriebes mit einer Kurvenführung (46, 47, 48) zum selbsttätigen Auslenken des Koppelelementes (41) bei einem Verfahren des Aktuators (3).

5. Stelleinrichtung (1) nach einem der Ansprüche 1 bis 3, **gekennzeichnet durch** ein Betätigungselement (26, 28) zum Auslenken des Koppelelementes (21) bei einem Verfahren des Aktuators (3).

6. Stelleinrichtung (1) nach Anspruch 5, **gekennzeichnet durch** einen Anschlag (38) zum Abstützen des Betätigungselementes (26, 28).

7. Stelleinrichtung (1) nach Anspruch 6, **dadurch gekennzeichnet, dass** die Position des Anschlages (38) einstellbar ist.

8. Stelleinrichtung (1) nach einem der Ansprüche 5 bis 7, **dadurch gekennzeichnet, dass** Betätigungselement (26, 28, 62) und Koppelelement (21, 61) in einem gemeinsamen Bauteil zusammengefasst sind.

## Claims

1. Actuating device (1), for a motor vehicle parking brake,
- with an electromechanically actuated drive (2),
- with an actuator (3) which can be actuated by the drive (2),
- with a brake cable pull (4) which can be actuated by the actuator (3),
- with a coupling device (20; 40) for cancelling and restoring a frictional connection between the actuator (3) and the brake cable pull (4), in which the coupling device (20; 40) comprises a coupling element (21; 41) which, when the brake cable pull (4) is released, can, in order to cancel the frictional connection, be deflected and transferred into a defined final position via a gate type gear (26, 27, 28, 29, 30, 31, 32, 33, 34, 35; 44, 45, 46, 47, 48),
**characterised by** a spring element (68) which, in the case of a cancelled frictional connection, exerts a force on one part (24) of the coupling device (20, 40), to guarantee a defined cable pre-tensioning force when the frictional connection between the actuator (3) and the brake cable pull (4) is restored.

2. Actuating device (1) according to claim 1, **characterised in that** the coupling device (20; 40) can be actuated by the brake actuator (3).

3. Actuating device (1) according to claim 1 or 2, **characterised by** a control unit for controlling the actuation of the coupling device (20; 40).

4. Actuating device (1) according to one of the claims 1 to 3, **characterised by** the interaction of the gate type gear with a curve guide (46, 47, 48) for the automatic deflection of the coupling element (41) when the actuator is moved (3).

5. Actuating device (1) according to one of the claims 1 to 3, **characterised by** an actuation element (26, 28) for the deflection of the coupling element (21) when the actuator is moved (3).

6. Actuating device (1) according to claim 5, **characterised by** a limit stop (38) for supporting the actuation element (26, 28).

7. Actuating device (1) according to claim 6, **characterised in that** the position of the limit stop (38) can be adjusted.

8. Actuating device (1) according to one of the claims 5 to 7, **characterised in that** the actuation element (26, 28, 62) and the coupling element (21, 61) are combined in a common component.

## Revendications

1. Dispositif de réglage (1) pour un frein de stationnement de véhicule automobile, comprenant
- un entraînement (2) actionné par voie électromécanique,
- un actionneur (3) pouvant être actionné par l'entraînement (2),
- un ensemble de tirage de frein (4) pouvant être actionné par l'actionneur (3),
- un dispositif d'accouplement (20 ; 40) destiné à couper et rétablir une chaîne de transmission de force entre l'actionneur (3) et l'ensemble de tirage de frein (4), le dispositif d'accouplement (20 ; 40) présentant un élément d'accouplement (21 ; 41) qui, lors d'un desserrage de l'ensemble de tirage de frein (4), peut être désengagé pour supprimer la chaîne de transmission de force et amené dans une position extrême définie par l'intermédiaire d'un mécanisme à coulisse (26, 27, 28, 29, 30, 31, 32, 33, 34, 35 ; 44, 45, 46, 47, 48),
**caractérisé par** un élément ressort (68) qui, lorsque la chaîne de transmission de force est coupée, sollicite une partie constitutive (24) du dispositif d'accouplement (20, 40), pour garantir la présence d'une force de précontrainte définie du câble au moment du rétablissement de la chaîne de transmission de force entre l'actionneur (3) et l'ensemble de tirage de frein (4).

2. Dispositif de réglage (1) selon la revendication 1, **caractérisé en ce que** le dispositif d'accouplement (20 ; 40) peut être actionné par l'actionneur de frein (3).

3. Dispositif de réglage (1) selon la revendication 1 ou 2, **caractérisé par** une unité de commande servant à commander l'actionnement du dispositif d'accouplement (20; 40).

4. Dispositif de réglage (1) selon une des revendications 1 à 3, **caractérisé en ce que** le mécanisme à coulisse coopère avec un guidage formant came (46, 47, 48) pour assurer la désengagement automatique de l'élément d'accouplement (41) lors d'un déplacement de l'actionneur.

5. Dispositif de réglage (1) selon une des revendications 1 à 3, **caractérisé par** un élément d'actionnement (26, 28) servant à désengager l'élément d'accouplement (21) lors d'un déplacement de l'actionneur (3).

6. Dispositif de réglage (1) selon la revendication 5, **caractérisé par** une butée (38) destinée à constituer un appui pour l'élément d'actionnement (26, 28).

7. Dispositif de réglage (1) selon la revendication 6, **caractérisé en ce que** la position de la butée (38) est réglable.

8. Dispositif de réglage (1) selon l'une des revendications 5 à 7, **caractérisé en ce que** l'élément d'actionnement (26, 28, 62) et l'élément d'accouplement (21, 61) sont regroupés dans un composant commun.
